# EUROPEAN PATENT SPECIFICATION

(11) **EP 2 078 381 B1**
(45) Date of publication and mention of the grant of the patent: **02.05.2012**
(21) Application number: 07846180.3
(22) Date of filing: 27.12.2007
(51) Int. Cl.: H04L 12/46

(54) **METHOD OF DETECTING TRANSPORT LEAKS IN HYBRID SWITCHING NETWORKS**
VERFAHREN ZUR ERKENNUNG VON TRANSPORTLECKS IN HYBRIDSCHALTUNGSNETZWERKEN
PROCÉDÉ DE DÉTECTION DE FUITES DE TRANSPORT DANS DES RÉSEAUX DE COMMUTATION HYBRIDES

(30) Priority: 28.12.2006 US 882404 P; 27.03.2007 US 691558
(43) Date of publication of application: 15.07.2009
(73) Proprietor: Huawei Technologies Co., Ltd., Shenzhen, Guangdong Province 518129 (CN)
(72) Inventor: SULTAN, Robert, Somers, New York 10589 (US); DUNBAR, Linda, Plano, Texas 75025 (US); YONG, Lucy, Tulsa, Oklahoma 74137 (US)
(74) Representative: Gulde, Klaus W.
(86) International application number: PCT/CN2007/071354
(87) International publication number: WO 2008/083591

(56) References cited:
- EP-A1- 1 670 187
- EP-A1- 1 670 187
- EP-A2- 1 244 254
- CN-C- 1 292 567
- US-A- 5 844 890
- US-A1- 2003 131 131
- US-A1- 2004 264 505

## Description

### FIELD OF THE INVENTION

The present invention relates to a hybrid switching network technology, and particularly to a method of detecting transport leaks in hybrid switching networks.

### BACKGROUND

Modem communication and data networks are comprised of nodes that transport data through the network. The nodes may include routers, switches, and/or bridges that transport the individual data frames or packets through the network. A hybrid switching network is one in which the network is partitioned into virtual local area networks (VLANs) using VLAN identifiers (VIDs) or by some other criterion, and deploys one of multiple transport methodologies, depending on the VID with which it is associated.

One of the problems that occur in hybrid switching networks is the misprovisioning of a node. When this occurs, copies of frames from one transport connection leak into other transport connections that share the same VID. The result is that multiple copies of the frame are delivered to the destination and/or the effective capacity of the transport connections is less than the committed capacity. Consequently, a need exists for methods of detecting or preventing frame leakage in a hybrid switching network when misprovisioning occurs.
EP 1670187 A1 discloses a VLAN tagging method employed in a data communications switching device. VLAN tagging is processed in accordance with one of a plurality of VLAN tagging modes, namely, a fixed port mode, a tagged port mode, a protocol-enforced port mode, a protocol-enforced port mode, and a standards-observant mode. The fixed port mode applies a VLAN tag with a default VLAN identifier associated with the ingress port. The tagged port mode preserves the tag received with the packet, or appends a new tag with a default VLAN identifier if the incoming VLAN tag is not present. In the protocol-enforced port mode, the VLAN identifier is selected based on the protocol type of the received PDU. In the standards-observant mode, an incoming VLAN tag is retained if present, or a new tag selected based on the protocol type of the received PDU if the received packet is untagged.
US 2003/131131 A1 provides a communications system in which both a layer-2 and layer-3 virtual private networks (VPNS) can operate in an efficient and cost-effective way to offer improved network services. An ingress edge node has a path data manager which sets and manages path data describing configuration of an intra-network transport path. For transport over the intra-network transport path, a labeling unit adds an intra-network transport label to each outgoing frame, based on the path data. Those frames also have a VPN label for transport over an end-to-end VPN path. In an egress edge node, a frame discrimination value setting unit gives a frame discrimination value for identifying to which VPN each received frame belongs. A redirection processor redirects the received frames to their destinations according to their VPN labels and frame discrimination value.

### SUMMARY

In one embodiment,
the disclosure includes a method comprising: receiving a frame associated with a destination address, a VID, and a forwarding type, determining whether the forwarding type associated with the frame is consistent with a forwarding type associated with the VID, and forwarding the frame to a port associated with the destination address if the forwarding type associated with the frame is consistent with the forwarding type associated with the VID.

These and other features will be more clearly understood from the following detailed description taken in conjunction with the accompanying drawings and claims.

### BRIEF DESCRIPTION OF THE DRAWING(S)

For a more complete understanding of the present disclosure, reference is now made to the following brief description, taken in connection with the accompanying drawings and detailed description, wherein like reference numerals represent like parts.

FIG. 1A is a framework of one embodiment of a hybrid communications network.

FIG. 1B is a framework of one embodiment of hybrid communications network.

FIG. 1C is a framework of one embodiment of a hybrid communications network.

FIG. 2 is a framework of another embodiment of an Ethernet frame.

FIG. 3 is a flowchart of one embodiment of a Frame Modification Method.

FIG. 4 is an illustration of one embodiment of a VID Table.

FIG. 5 is a flowchart of one embodiment of a Frame Processing Method.

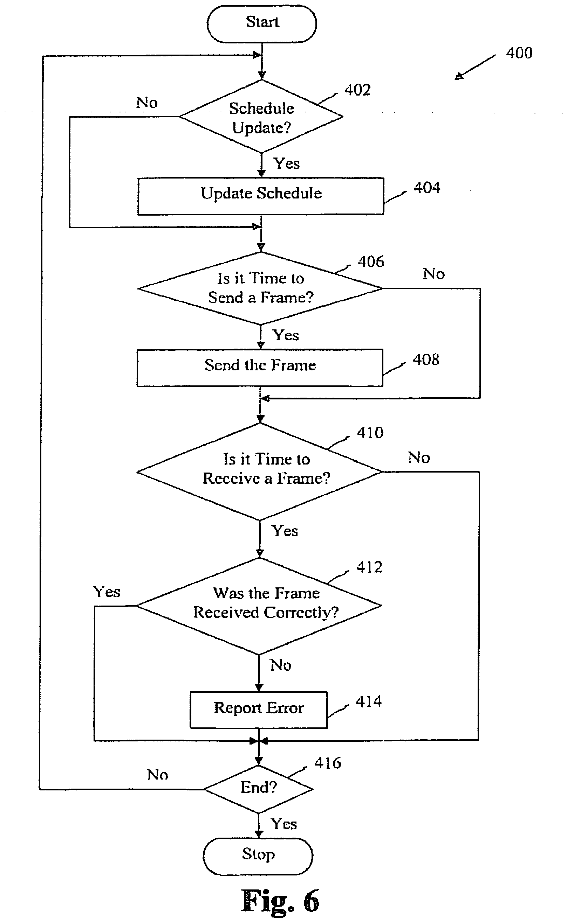

FIG. 6 is a flowchart of one embodiment of a Leakage Detection Method.

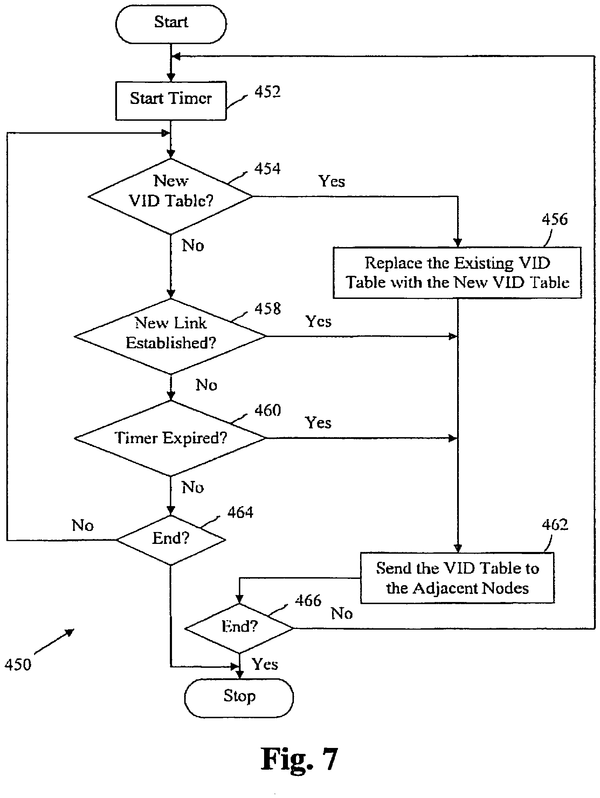

FIG. 7 is a flowchart of one embodiment of a VID Table Consistency Verification Method.

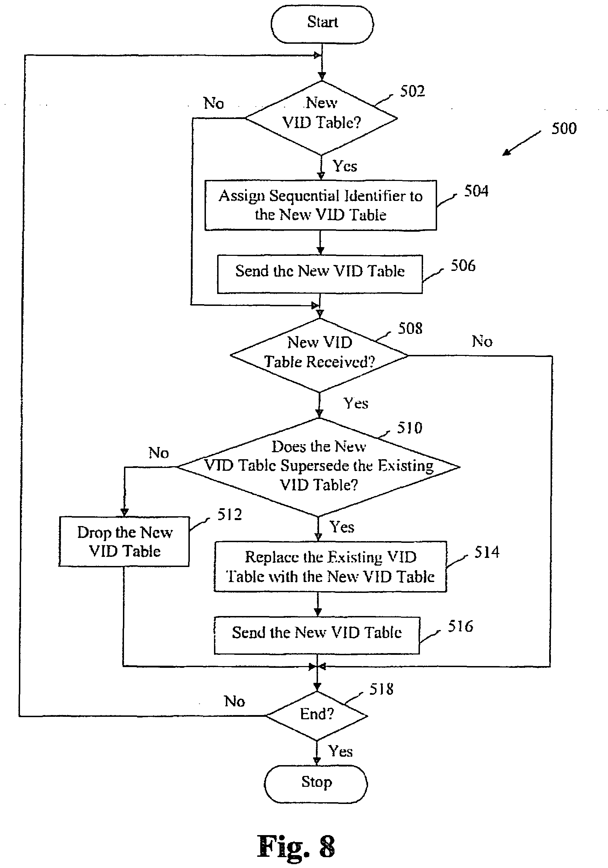

FIG. 8 is a flowchart of another embodiment of the VID Table Consistency Verification Method.

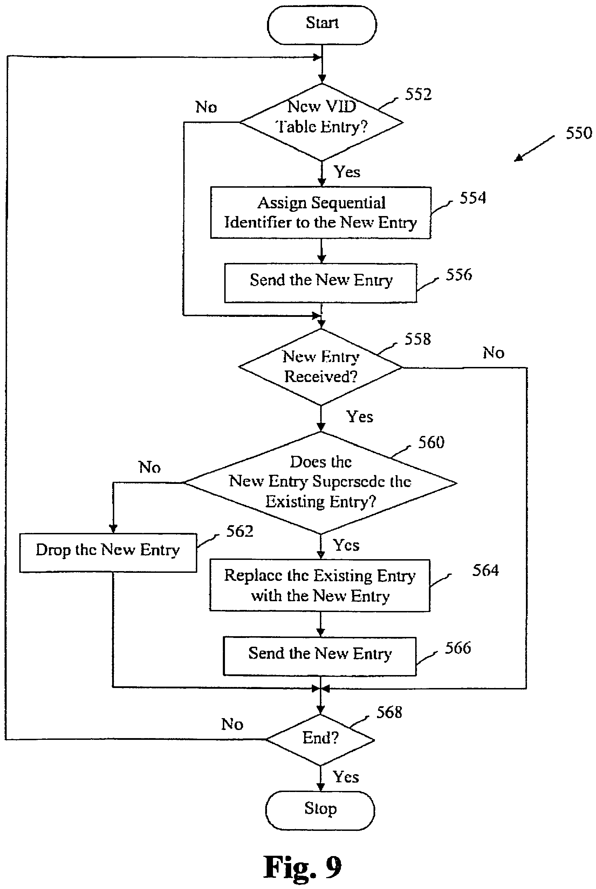

FIG. 9 is a flowchart of another embodiment of the VID Table Consistency Verification Method.

FIG. 10 is a framework of one embodiment of a general-purpose network component.

### DETAILED DESCRIPTION

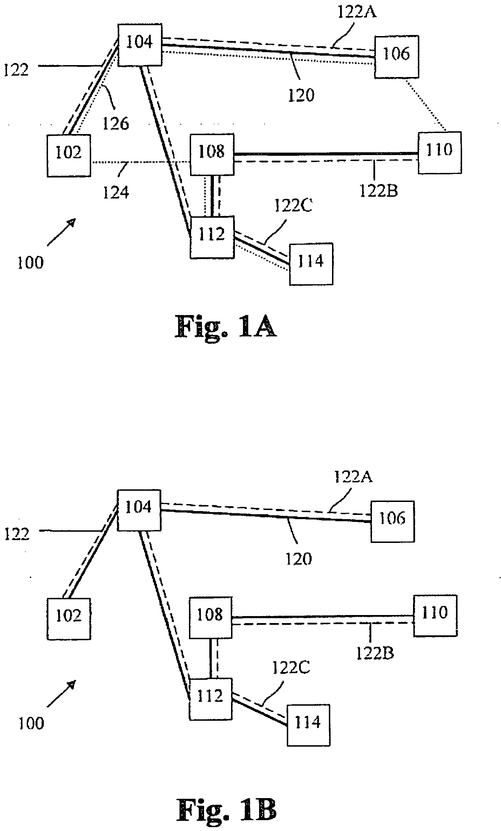

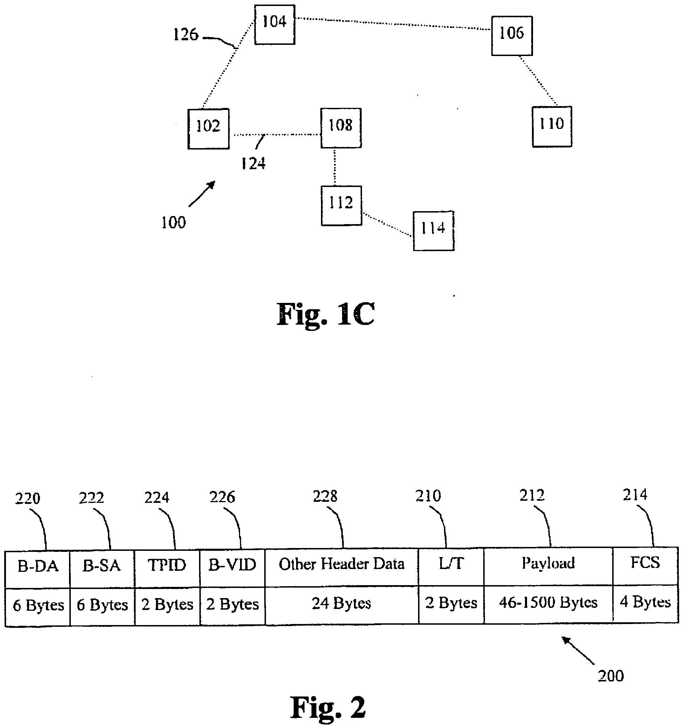

FIGS. 1A, 1B, and 1C illustrate one embodiment of a hybrid communications network 100. Specifically, FIG. 1A illustrates the integrated network configuration, while FIG. 1B illustrates the bridged (connectionless) portion of the network and FIG. 1C illustrates the switched (connection-oriented) portion of the network. The network 100 comprises a plurality of nodes 102, 104, 106, 108, 110, 112, 114 (102-114) that are at least partially interconnected together using a plurality of links (not shown). The flow of traffic within the bridged portion of the network 100 may be improved by the inclusion of at least one VLAN 122 and a spanning tree 120. Similarly, the flow of traffic within the switched portion of the network 100 may be improved by the inclusion of a plurality of connections 124, 126. These components are described in further detail below. Both the switched portion and the bridged portion of the network 100 use a VID to associate the frames with either the VLAN 122 or connections 124, 126. As such, the network 100 may also include a management or control plane (not shown) that may provision the nodes 102-114 such that the VIDs are associated with either the switched portion or the bridged portion of the network 100.

The network 100 may be any type of network 100 that transports frames from a source node to a destination node. Specifically, the network 100 may be a hybrid switching network that transports both bridged and switched frames from the source node to the destination node using the VLAN 122 or the connection 124, 126. The network 100 may be a backbone network, a provider network, or an access network running any one of a variety of protocols. Ethernet is a suitable protocol, and the methods described herein may be adapted for other protocols, including Internet Protocol (IP) and Asynchronous Transfer Mode (ATM), among others. In a specific embodiment, the network 100 is a hybrid bridged and switched Ethernet backbone network.

The nodes 102-114 may be any device that transports frames through the network 100. For example, the nodes 102-114 may include bridges, switches, routers, or various combinations of such devices. Such devices typically contain a plurality of ingress ports for receiving frames from other nodes 102-114, logic circuitry to determine which nodes 102-114 to send the frames to, and a plurality of egress ports for transmitting frames to the other nodes 102-114. In an embodiment, the nodes 102-114 make the determinations needed to transport the frames through the network at Open System Interconnection (OSI) layer two. The nodes 102-114 may include Backbone Edge Bridges (BEBs), Backbone Core Bridges (BCBs), Provider Edge Bridges (PEBs), S-VLAN Bridges as defined by IEEE 802.1 ad, C-VLAN Bridges as defined by IEEE 802.1Q, or various combinations of such devices. Edge bridges may be connected to nodes within two different networks, such as a provider network and a backbone network or a customer network and a provider network, while core bridges are typically connected to other nodes within the same network. For example, if the network 100 is a backbone network, then the nodes 102, 110, 114 may be BEBs, while the nodes 104, 106, 108, 112 may be BCBs.

The nodes 102-114 within the network 100 may communicate with each other via a plurality of links. The links may be electrical, optical, wireless, or any other type of communications links. While it is contemplated that every node 102-114 within the network 100 may be connected to every other node 102-114 within the network 100, it is more common to have each of the nodes 102-114 connected to only some of the other nodes 102-114 within the network 100. Such a configuration reduces the number of the links between the various nodes 102-114. In the case where the nodes 102-114 are geographically separated from each other, the reduced number of links significantly decreases the complexity and the cost of the network 100.

The nodes 102-114 may send frames to other nodes 102-114 using a spanning tree 120. Briefly, the spanning tree 120 is a protocol that resides in the network 100 that allows frames to be forwarded through the network 100 without taking circular or looping paths. Specifically, the spanning tree 120 describes a unique path from a node in the network 100 to another node in the network 100. The uniqueness of the path prevents loops within the network 100. The spanning tree 120 is associated with the network 100, and there may be multiple spanning trees 120 per network 100. In steady state, a spanning tree 120 should include all nodes in the network 100. Examples of suitable spanning tree protocols for creation of a spanning tree 120 include Spanning Tree Protocol (STP), Rapid Spanning Tree Protocol (RSTP), and Multiple Spanning Tree Protocol (MSTP).

The bridged portion of the network 100 may include at least one VLAN 122. The VLAN 122 may be a contiguous subset of bridges and links associated with a particular spanning tree. The VLAN 122 indicates the desired path for data to follow to get to a particular node. The VLAN 122 may have a plurality of branches 122A, 122B, 122C such that data can be transported to a node from any other node 102-114 associated with the VLAN 122. FIGS. 1A and 1B illustrate one example of a branched VLAN 122 associated with node 102. Alternatively, the VLAN 122 could be configured with a single branch, similar to a connection 124, 126. If desired, the network 100 may contain a plurality ofVLANs 122 for each node.

VIDs are used to associate the frames with the VLANs 122 in the bridged portion of the network 100. Generally, a VLAN is a portion of a spanning tree, thus the VLAN is a tree. The VLAN may have branches, and all of the branches of the VLAN have the same VID. Each VLAN is associated with only one VID; however, a VID may be associated with a plurality of distinct VLANs when the VLANs do not overlap.

The VLANs 122 may be used to transport the frames through the bridged portion of the network 100. Such a process begins by associating the frames with the VLAN 122 by adding the VID to the frames. The VID may also be added to a forwarding database in each of the nodes 102-114, if desired. When a node 102-114 receives a frame with a VLAN 122, the node 102-114 accesses the forwarding database and uses the frame's destination address and VID to determine the egress port on which the frame is to be forwarded. If the forwarding database lacks an entry for the destination address and VID, then the node 102-114 floods the frame on all of its egress ports associated with the spanning tree 120, except the port on which the frame was received. Thus, the frames can be forwarded to the destination node from any node 102-114 within the network 100.

The node 102-114 can "learn" the source address by adding the source address, the VID, and the port on which the frame was received to the forwarding database. Thus, when the node 102-114 receives a frame with a destination address identical to the previous frame's source address, the node 102-114 knows where to send the frame.

The switched portion of the network 100 may include at least one connection 124, 126. The connections 124, 126 may be point-to-point logical paths between BEBs 102 and 110, and between BEBs 102 and 114 respectively at the edge of the network. Unlike the VLAN 122, the connections 124, 126 are singular point-to-point connections in that they do not contain any branches. In specific embodiments, the connection 124, 126 may be an Ethernet Virtual Connection (EVC) as defined by the Metropolitan Ethernet Forum (MEF) or an Ethernet Switched Path (ESP).

Similar to the bridged portion of the network 100, the switched portion of the network may use VIDs to associate the frames with the connections 124, 126. Each connection 124, 126 may be uniquely identified by its destination address, source address, and VID. More specifically, no two connections 124, 126 in a single network 100 may share a common destination address, source address, and VID combination.

Similar to the bridged portion, the switched portion of the network 100 transports the frames through the network 100 by first associating the frames with the connection 124, 126. Specifically, the VID is added to the frames and to the forwarding database of each node 102-114 associated with the connection 124, 126. When a node 102-114 receives a frame associated with a connection 124, 126, the node 102-114 accesses the forwarding database and uses the frame's destination address and VID to determine the egress port associated with the connection 124, 126. The node 102-114 then forwards the frame to the specific egress port associated with the frame's destination address and VID. Because the forwarding database is provisioned at each node 102-114, the flooding, learning, and spanning tree portions of the bridged portion of the network 100 are not used in the switched portion of the network 100. As such, if a node 102-114 encounters a frame that is associated with a connection 124, 126 that is not in the forwarding database, the node 102-114 drops the frame. Thus, frames traveling along the connection 124, 126 may be transported through the network 100 with minimal processing at each node 102-114.

The problems associated with such a network configuration become apparent when a node 102-114 is misprovisioned. As an example, assume that the VLAN 122 is associated with VID 5 and that the connections 124, 126 are associated with VID 10. Thus, frames associated with VID 5 should be bridged, while frames associated with VID 10 should be switched. Further, assume that node 112 has been misprovisioned in that it has erroneously associated VID 10 with bridged behavior instead of switched behavior and that no forwarding entry has been provisioned. It would be normal not to provision a forwarding entry when the associated VID is provisioned for bridging. When node 112 receives a frame associated with VID 10 from node 114, node 112 should forward the frame to node 108. However, because node 112 associates VID 10 with bridged behavior instead of switched behavior, the node 112 processes the frame as a bridged frame. Additionally, because no forwarding entry is provisioned, the node 112 does not find the frame's destination address in its forwarding database, the node 112 floods the frame to nodes 104 and 108 in accordance with the spanning tree 120. In such a case, node 104 sends the frame to node 102 using the connection 126, and node 108 forwards the frame to node 102.

Misprovisioned nodes may be created when a provider upgrades a node 102-114 from bridged behavior to hybrid (bridged and switched) behavior. Specifically, during the upgrade the provider may continue to use the node primarily for bridging, and gradually declare specific VIDs associated with switching. Thus, it is likely that a VID assigned to switching would have previously been assigned to bridging. The failure to update the VID in the forwarding database of a single node 102-114 along the connection 124, 126 would cause the described misprovisioning. As a result, the misprovisioned node decreases the quality of service for the connection 126 by allowing frames from the connection 124 to leak into connection 126. The misprovisioned node can also cause duplicate frames to reach the destination node 102, such as when node 112 floods the frame to nodes 104 and 108. Finally, the existence of the misprovisioned nodes is usually difficult to determine because the frames ultimately reach their destination, and thus no alarms are raised. Consequently, a need exists for a method for detecting and/or preventing misprovisioned nodes in a hybrid switching network.

Disclosed herein are methods for detecting and/or preventing misprovisioned nodes in a hybrid switching network. Specifically, the frames may be associated with a particular forwarding type, which may be bridged or switched. In addition, a VID Table that indicates the forwarding behavior associated with each VID is provided at each node associated with the connections 124, 126. Leaked frames and thus the existence of a misprovisioned node may be detected by comparing the frames' forwarding type with the VID Table. Frames with inconsistent forwarding types are dropped, so that leaked frames do not compromise the bandwidth allocated to other connections 124, 126. Furthermore, several methods are provided for maintaining correctly provisioned nodes within the network 100.

A frame may be any unit of data that is transported from a source to a destination. FIG. 2 is an example of a frame 200 that has been modified to include the forwarding type. Specifically, FIG. 2 illustrates an IEEE 802.1ah Ethernet frame that may comprise the following fields: a destination address 220, a source address 222, a tag protocol identifier (TPID) 224, a backbone VID (B-VID) 226, other header data 228, a length/type 210, a payload 212, and a frame check sequence 214. Briefly, the destination address 220 may indicate the destination node, and the backbone source address 222 may indicate the backbone source node. Persons of ordinary skill in the art will appreciate that the destination address and source address may refer to Media Access Control (MAC) addresses, including Backbone MAC (B-MAC) addresses. The other header data 228 may include various other header information known to persons of ordinary skill in the art, the length/type 210 indicates the length or type of payload, the payload 212 is the data that the frame is carrying, and the frame check sequence 214 is used to verify the integrity of the frame. The frame 200 may also include a preamble that identifies the start of the frame.

The TPID 224 may be used to identify the forwarding type associated with the frame, and the backbone VID 226 may be used to identify the VID associated with the frame. For example, the value "88A8" in the TPID 224 field may indicate that the VID identified in the B-VID 226 field identifies a bridged VID. Similarly, other values such as "8100" or any other assigned value may indicate that the VID identified in the B-VID 226 field identifies a switched VID. If other forwarding types exist within the network, then the TPID 224 and the VID 226 fields may be used to associate the frames with those forwarding types. Persons of ordinary skill in the art are aware of other entries that can be used to associate one of the TPID 224 fields with the various forwarding types.

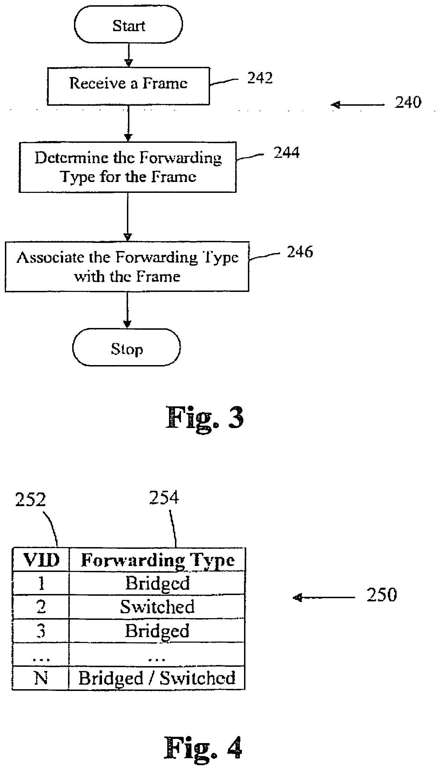

FIG. 4 illustrates one example of a VID Table 250 that is used by the Frame Modification Method 240 discussed above and the Frame Processing Method 300 discuss below. The VID Table 250 comprises at least two columns: a VID column 252 and a forwarding type column 254. The VID column 252 lists the various VIDs associated with the network. The forwarding type column 254 lists the forwarding type associated with each VID. The VID Table 250 may also contain columns for the destination address and source address, if desired. Thus, the rows within the VID Table 250 characterize the forwarding type associated with each VID in the network. In an embodiment, the VID Table 250 at each node may only contain the entries for the VIDs that the node is associated with. As explained in detail below, the VID Table 250 may be accessible by or distributed to every node within the network using various methods and/or protocols. Moreover, the consistency of the VID Table 250 throughout the nodes can be maintained and verified using the methods disclosed herein.

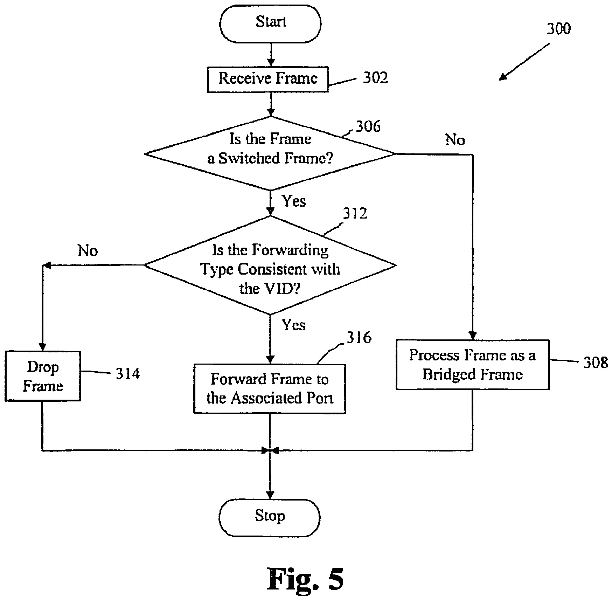

FIG. 5 illustrates one embodiment of a Frame Processing Method 300. The Frame Processing Method 300 works with the Frame Modification Method 240 described above to ensure that the type carried in the frame is consistent with the type configured for the VID at each intermediate node. Specifically, the Frame Processing Method 300 drops the frames when the frames' forwarding type is inconsistent with the forwarding type in the VID Table. The Frame Processing Method 300 is generally implemented at the nodes associated with a connection, but may also be implemented at any other node within the network.

The Frame Processing Method 300 may begin when a node receives a frame at 302. The frame is generally received from another node in the same network, such as a backbone network. The Frame Processing Method 300 then analyzes the frame to determine whether the frame is a switched frame at 306. As discussed above, the frame's forwarding type defines whether the frames are transported across the network using a bridged behavior or a switched behavior. The frame's forwarding type may be determined by accessing the forwarding type embedding in the frame. If the frame is a switched frame, then the Frame Processing Method 300 proceeds to block 310. If the frame is not a switched frame, then the Frame Processing Method 300 proceeds to block 308.

The Frame Processing Method 300 processes the frame as a bridged frame at 308. Specifically, the Frame Processing Method 300 may access a forwarding database to determine the egress node associated with the frame, and may forward the frame onto the appropriate egress port. Alternatively, the Frame Processing Method 300 may flood the frame onto a plurality of ports in accordance with the process described above. In addition, the Frame Processing Method 300 may also add the frame's source address and ingress port to the forwarding database, if desired. The Frame Processing Method 300 then ends until another frame is received.

The Frame Processing Method 300 then determines whether the frame's forwarding type is consistent with the VID at 312. The frame's forwarding type is consistent with the VID if the frame's forwarding type is the same as the forwarding type associated with the VID. As part of the consistency determination, the Frame Processing Method 300 may compare the frame's forwarding type to the forwarding type listed in the VID Table for the VID specified by the frame. Alternatively, the node may be aware of the forwarding types that the node is associated with and can determine whether the frame's forwarding type is associated with the node. If the frame's forwarding type is different than the forwarding type listed in the VID Table or the frame's forwarding type is not associated with the node, then the frame's forwarding type is inconsistent with the VID, and the Frame Processing Method 300 proceeds to 314. If the frame's forwarding type is the same as is listed in the VID Table or the frame's forwarding type is associated with the node, then the frame's forwarding type is consistent with the node, and the Frame Processing Method 300 proceeds to block 316.

The Frame Processing Method 300 may drop the frame at 314. In one embodiment, when the Frame Processing Method 300 drops the frame, the Frame Processing Method 300 may simply delete the frame and proceed to the next frame. However, in alternative embodiments, the Frame Processing Method 300 may be configured with functionality that is more sophisticated. Specifically, when the frame's determinations at blocks 310 or 312 are negative, there is a high likelihood that there is an incorrectly provisioned node within the network, for example an incorrectly provisioned VID Table in an upstream node. While dropping the frame prevents the leaked frame from affecting other connections, it does not correct the provisioning error. Thus, it is contemplated that the Frame Processing Method 300 may also raise an alarm to indicate that there is an error within the network. The Frame Processing Method 300 then ends until another frame is received.

At block 316, the Frame Processing Method 300 forwards the frame onto the appropriate port. Specifically, the Frame Processing Method 300 determines the egress port associated with the frame's destination address and VID, and forwards the frame onto the port specified in the forwarding database. After the frame is forwarded to the appropriate egress port, the Frame Processing Method 300 ends until another frame is received.

Persons of ordinary skill in the art will appreciate that the processes described herein can be modified to include the various concepts described herein. For example, it is contemplated that the processes described herein can be modified to create a method for verifying that the distributed VID Tables contain consistent content, or a method for distributing a replicated VID Table, where the entries specify whether the individual VIDs are bridged or switched. Such methods may be useful for distributing the existing version of the VID Table to all nodes in the network and to nodes joining the network, for example by a Simple Network Management Protocol (SNMP) SET function, or distributing individual VID Table entries to the nodes in the network when a node joins the network, or when a VID Table entry changes, is added, or is deleted. Such methods may also be useful for reading the existing version of the VID Table at all nodes in the network and at nodes joining the network, for example using the SNMP GET function, in order to verify that there are no inconsistencies among the VID Tables, or reading individual VID Table entries at all nodes in the network when a node joins the network, or when the entries change, are added, or are deleted in order to verify that there are no inconsistencies among the VID Tables.

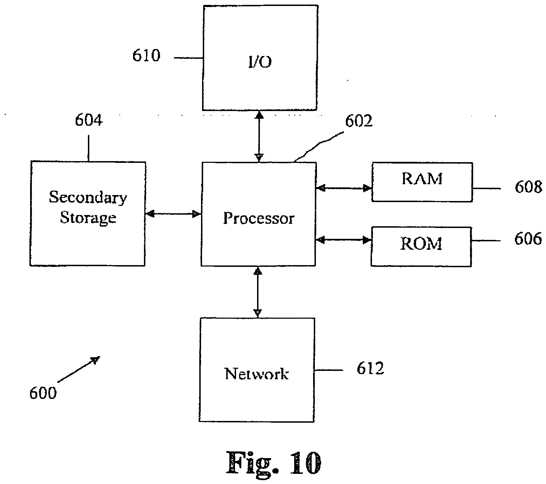

The network described above may be implemented on any general-purpose network component, such as a computer, router, switch, or bridge, with sufficient processing power, memory resources, and network throughput capability to handle the necessary workload placed upon it. FIG. 10 illustrates a typical, general-purpose network component suitable for implementing one or more embodiments of a node disclosed herein. The network component 600 includes a processor 602 (which may be referred to as a central processor unit or CPU) that is in communication with memory devices including secondary storage 604, read only memory (ROM) 606, random access memory (RAM) 608, input/output (I/O) 610 devices, and network connectivity devices 612. The processor may be implemented as one or more CPU chips.

The secondary storage 604 is typically comprised of one or more disk drives or tape drives and is used for non-volatile storage of data and as an over-flow data storage device if RAM 608 is not large enough to hold all working data. Secondary storage 604 may be used to store programs that are loaded into RAM 608 when such programs are selected for execution. The ROM 606 is used to store instructions and perhaps data that are read during program execution. ROM 606 is a non-volatile memory device that typically has a small memory capacity relative to the larger memory capacity of secondary storage. The RAM 608 is used to store volatile data and perhaps to store instructions. Access to both ROM 606 and RAM 608 is typically faster than to secondary storage 604.

## Claims

1. A method, comprising:
receiving a frame associated with a destination address, a VID, and a forwarding type (302);
determining whether the forwarding type associated with the frame is consistent with a forwarding type associated with the VID (312); and
forwarding the frame to a port associated with the destination address if the forwarding type associated with the frame is consistent with the forwarding type associated with the VID (316).

2. The method of claim 1, wherein the method further comprises: dropping the frame if the forwarding type associated with the frame is inconsistent with the forwarding type associated with the VID (314).

3. The method of claim 1, wherein the determining whether the forwarding type associated with the frame is consistent with a forwarding type associated with the VID comprises: accessing a table comprising a plurality of the VIDs and a plurality of the forwarding types associated with the VIDs.

4. The method of claim 1, wherein the forwarding type associated with the frame is located within the frame, and wherein a VID associated with the frame is located within the frame.

5. The method of claim 4, wherein the forwarding type is located in a type protocol identifier field, and the VID is located in a VID field.

6. The method of claim 1, wherein the frame is a switched frame.

7. The method of claim 1, wherein the method further comprises:
determining whether the destination address is in a forwarding database;
sending the frame to a port associated with the destination address if the destination address is in the forwarding database, and
dropping the frame, if the destination address is not in the forwarding database.

## Patentansprüche

1. Verfahren, umfassend:
Empfangen eines Rahmens, der mit einer Zieladresse, einer VID und einem Weiterleitungstyp assoziiert ist (302);
Bestimmen, ob der mit dem Rahmen assoziierte Weiterleitungstyp mit einem mit der VID assoziierten Weiterleitungstyp vereinbar ist (312); und
Weiterleiten des Rahmens zu einem mit der Zieladresse assoziierten Port, wenn der mit dem Rahmen assoziierte Weiterleitungstyp mit dem mit der VID assoziierten Weiterleitungstyp vereinbar ist (316).

2. Verfahren nach Anspruch 1, wobei das Verfahren ferner Folgendes umfasst:
Abwerfen des Rahmens, wenn der mit dem Rahmen assoziierte Weiterleitungstyp nicht mit dem mit der VID assoziierten Weiterleitungstyp vereinbar ist (314).

3. Verfahren nach Anspruch 1, wobei das Bestimmen, ob der mit dem Rahmen assoziierte Weiterleitungstyp mit einem mit der VID assoziierten Weiterleitungstyp vereinbar ist, Folgendes umfasst: Zugreifen auf eine Tabelle, die mehrere der VID und mehrere der mit den VID assoziierten Weiterleitungstypen umfasst.

4. Verfahren nach Anspruch 1, wobei der mit dem Rahmen assoziierte Weiterleitungstyp in dem Rahmen befindlich ist und wobei eine mit dem Rahmen assoziierte VID in dem Rahmen befindlich ist.

5. Verfahren nach Anspruch 4, wobei der Weiterleitungstyp in einem Typ-Protokoll-Kennungsfeld befindlich ist und die VID in einem VID-Feld befindlich ist.

6. Verfahren nach Anspruch 1, wobei der Rahmen ein vermittelter Rahmen ist.

7. Verfahren nach Anspruch 1, wobei das Verfahren ferner Folgendes umfasst:
Bestimmen, ob sich die Zieladresse in einer Weiterleitungsdatenbank befindet;
Senden des Rahmens zu einem mit der Zieladresse assoziierten Port, wenn sich die Zieladresse in der Weiterleitungsdatenbank befindet; und
Abwerfen des Rahmens, wenn sich die Zieladresse nicht in der Weiterleitungsdatenbank befindet.

## Revendications

1. Procédé, comprenant :
la réception d'une trame associée à une adresse destinataire, un VID, et un type d'acheminement (302) ;
la détermination du fait que le type d'acheminement associé à la trame est cohérent ou non avec un type d'acheminement associé au VID (312) ; et
l'acheminement de la trame à un port associé à l'adresse destinataire si le type d'acheminement associé à la trame est cohérent avec le type d'acheminement associé au VID (316).

2. Procédé selon la revendication 1, comprenant en outre : l'abandon de la trame si le type d'acheminement associé à la trame est incohérent avec le type d'acheminement associé au VID (314).

3. Procédé selon la revendication 1, dans lequel la détermination du fait que le type d'acheminement associé à la trame est cohérent ou non avec un type d'acheminement associé au VID comprend : la sollicitation d'une table comprenant une pluralité de VID et une pluralité de types d'acheminement associés aux VID.

4. Procédé selon la revendication 1, dans lequel le type d'acheminement associé à la trame est inséré au sein de la trame, et un VID associé à la trame est inséré au sein de la trame.

5. Procédé selon la revendication 4, dans lequel le type d'acheminement est inséré dans un champ d'identifiant de protocole de type, et le VID est inséré dans un champ de VID.

6. Procédé selon la revendication 1, dans lequel la trame est une trame commutée.

7. Procédé selon la revendication 1, dans lequel le procédé comprend en outre :
la détermination du fait que l'adresse destinataire se trouve ou non dans une base de données d'acheminement ;
l'envoi de la trame à un port associé à l'adresse destinataire si l'adresse destinataire se trouve dans la base de données d'acheminement, et
l'abandon de la trame, si l'adresse destinataire ne se trouve pas dans la base de données d'acheminement.
